(19) Europäisches Patentamt
European Patent Office
Office européen des brevets

(11) Numéro de publication: **0 038 736**
**B1**

(12) **FASCICULE DE BREVET EUROPEEN**

(45) Date de publication du fascicule du brevet: **14.12.83**

(51) Int. Cl.[3]: **C 09 B 19/00**

(21) Numéro de dépôt: **81400553.4**

(22) Date de dépôt: **07.04.81**

(54) **Procédé de préparation de colorants oxaziniques basiques.**

(30) Priorité: **18.04.80 FR 8008723**

(43) Date de publication de la demande:
**28.10.81 Bulletin 81/43**

(45) Mention de la délivrance du brevet:
**14.12.83 Bulletin 83/50**

(84) Etats contractants désignés:
**CH DE FR GB IT LI**

(56) Documents cités:
**FR - A - 2 294 209**
**FR - A - 2 317 336**
**FR - A - 2 431 520**

(73) Titulaire: **I.C.I. FRANCOLOR S.A.**
**8 Avenue Reaumur Boîte Postale 207**
**F-92142 Clamart Cedex (FR)**

(72) Inventeur: **Belfort, Gérard Lucien André**
**11, rue des Lilas**
**F-76350 Oissel (FR)**

(74) Mandataire: **Houghton, Malcolm John et al,**
**Imperial Chemical Industries PLC Legal**
**Department: Patents Thames House North**
**Millbank**
**London SW1P 4QG (GB)**

**EP 0 038 736 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé de préparation de colorants oxaziniques basiques

La présente invention concerne un nouveau procédé de préparation de colorants oxaziniques basiques qui peuvent être représentés par la formule générale:

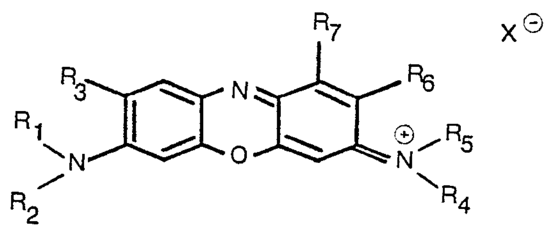

(I)

dans laquelle $R_1$ représente un atome d'hydrogène ou un radical alkyle, alcényle ou aralkyle éventuellement substitué, $R_2$ représente un radical alkyle, alcényle, cycloalkyle, aryle ou aralkyle éventuellement substitué, $R_3$ représente un atome d'hydrogène ou un radical alkyle ou alcoxy, $R_4$ représente un atome d'hydrogène ou un radical alkyle, aryle ou aralkyle éventuellement substitué, $R_5$ représente un atome d'hydrogène ou un radical alkyle éventuellement substitué, $R_6$ représente un atome d'hydrogène ou un radical alkyle ou alcoxy, $R_7$ représente un atome d'hydrogène ou un radical alkyle ou forme avec $R_6$ un noyau benzénique condensé, et $X^{\ominus}$ représente un anion.

Dans cette formule, les radicaux alkyle et alcoxy préférés sont ceux contenant de 1 à 4 atomes de carbone. Comme substituants éventuels des radicaux alkyle que peuvent représenter $R_1$, $R_2$, $R_4$ et $R_5$, on peut citer, par exemple, les atomes d'halogène et les groupes hydroxy, cyano, carbamoyle, alcoxy ou alcoxycarbonyle. Quand $R_1$, $R_2$ ou $R_4$ représente un radical aryle ou aralkyle, celui-ci est de préférence un radical phényle ou benzyle et peut porter des substituants usuels tel que: halogène, alkyle, trifluorométhyle, cycloalkyle, hydroxy, alcoxy, aralcoxy, cycloalcoxy, aryloxy, carboxy, acyle, acyloxy, acylamino, acylalcoxycarbonyl, nitro, cyano, carbamoyle, sulfamoyle, amino, alkylamino, dialkylamino, arylamino, mercapto, alkylmercapto, arylmercapto, alkylsulfonyl, arylsulfonyl. L'anion $X^{\ominus}$, minéral ou organique, peut être celui fourni directement par le procédé de préparation ou provenir d'une réaction d'échange d'anions ultérieure; comme exemples d'anions, on peut citer plus particulièrement les anions chlorure, sulfate, nitrate, phosphate, formiate, acétate, propionate, oxalate, lactate, tartrate, thiocyanate, perchlorate, chlorozincate, benzoate, nitrobenzoate, benzène- ou toluène- ou naphtalène-sulfonate, sulfométhylate, sulfoéthylate, carbonate et bicarbonate.

La nitrosation d'amines aromatiques mono- ou di-substituées et la réaction des composés nitroso obtenus avec des méta-aminophenols ou leurs éthers alkyliques ou encore avec des méta-phénylène-diamines pour obtenir des dérivés cationiques de phénoxazine constituent une suite bien connue d'opérations, abondamment décrites dans la littérature (voir PSAAR et HEITZER, Chem. Ber. 102, 3603—3604 (1969); les brevets français 2 036 034, 2 045 397, 2 099 211, 2 121 198, 2 124 306, 2 171 260, 2 268 842, 2 294 209, 2 317 336, 2 357 603 et 2 431 520; la demande de brevet européen 0 005 451). Ainsi, les colorants de formule (I) peuvent être préparés en faisant réagir en milieu aqueux et/ou organique:

a) un composé nitroso de formule (II) avec un aminophénol de formule (III):

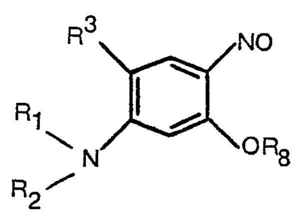

(II)

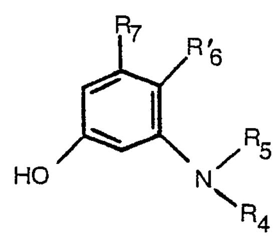

(III)

dans lesquelles les symboles $R_1$ à $R_5$ et $R_7$ ont les mêmes significations que ci-dessus, $R'_6$ représente un atome d'hydrogène ou un radical alkyle et $R_8$ représente un radical alkyle éventuellement substitué, ou

b) un composé nitroso de formule (IV) avec un composé de formule (V):

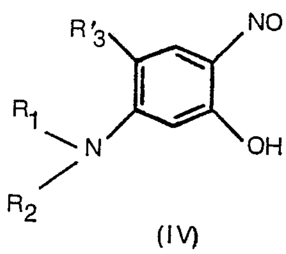

(IV)

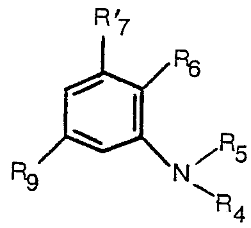

(V)

dans lesquelles les symboles $R_1$, $R_2$, $R_4$, $R_5$ et $R_6$ ont les mêmes significations que ci-dessus, $R'_3$ et $R'_{76}$ représentent chacun un atome d'hydrogène ou un radical alkyle, et $R_9$ représente un radical alcoxy ou un groupe amino éventuellement substitué par un ou deux radicaux alkyle.

Cependant, les procédés connus présentent tous l'inconvénient de nécessiter d'opérer à température élevée, par exemple dans un alcool aliphatique maintenu au reflux, pour que la réaction de condensation-cyclisation puisse se produire rapidement. La préparation des colorants de formule (I) nécessite donc à l'échelle industrielle un appareillage compliqué de contenance réduite, une conduite de l'opération qui peut être dangereuse et surtout une énergie coûteuse pour amener et maintenir les réactifs à la température de réaction. D'autre part, l'emploi connu de sels métalliques, notamment du chlorure de zinc, dans ce type de réaction ne permet pas de provoquer la formation du colorant à basse température.

Il a maintenant été trouvé, dans les services de la demanderesse, que les colorants de formule (I) peuvent être préparés dans de simples cuves et sans chauffage, donc avec une économie d'énergie et de temps importante et une augmentation de la capacité unitaire de synthèse, lorsque l'on effectue la réaction en présence d'un anhydride d'acide carboxylique de formule:

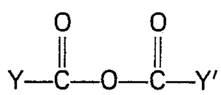

(VI)

dans laquelle Y et Y' sont identiques ou différents et représentent chacun un radical alkyle linéaire ou ramifié, contenant 1 à 6 atomes de carbone et éventuellement substitué par des atomes d'halogène, ou un radical phényle pouvant porter jusqu'à trois substituants choisis parmi les atomes d'halogène et les groupes nitro, alkyle et alcoxy, l'un des symboles Y et Y' pouvant également représenter un atome d'hydrogène, cet anhydride étant employé en une quantité au moins égale à la stoechiométrie.

Comme exemples d'anhydrides de formule (VI) à utiliser selon l'invention, on peut citer les anhydrides acétoformique, propionique, butyrique, isobutyrique, valérique, isovalérique, hexanoïque, chloroacétique, trifluoroacétique, triméthylacétique ou benzoïque et, tout particulièrement, l'anhydride acétique qui est un produit de fabrication courante; on peut évidemment utiliser aussi un mélange d'anhydrides. Pour obtenir une réaction complète, il est généralement suffisant d'employer la quantité stoechiométrique d'anhydride. Cependant, dans certains cas, cette proportion peut être légèrement augmentée jusqu'à atteindre trois fois la quantité stoechiométrique; l'emploi d'une quantité d'anhydride supérieure à cette dernière proportion est inutile, mais sans inconvénient pour le procédé et reste donc conforme à la présente invention.

Est également compris dans le cadre de la présente invention le cas où l'anhydride est formé in situ, par exemple par action d'un halogénure d'acide carboxylique, comme par exemple le chlorure d'acétyle, sur un sel alcalin d'acide carboxylique, comme par exemple l'acétate de sodium.

La mise en oeuvre du procédé selon l'invention est généralement très simple; elle consiste à mélanger à température ambiante, dans un milieu liquide qui joue le rôle de dissolvant ou de dispersant, un composé nitroso de formule (II) ou (IV) avec respectivement un composé de formule (III) ou (V), puis, sans qu'il soit nécessaire d'élever la température, à provoquer la formation du colorant par addition d'un anhydride de formule (VI). Une fois la réaction achevée, généralement contrôlée par l'absence du composé nitroso de départ, le sel de phénoxazinium obtenu peut alors être séparé selon les méthodes connues.

Selon une variante du mode opératoire précédent, variante fréquemment employée et qui donne également de très bons résultats, on mélange dans le diluant un composé de formule (III) ou (V) et l'anhydride de formule (VI), puis on y introduit le composé nitroso de formule (II) ou (IV) sous forme solide ou encore sous forme d'une solution ou d'une suspension dans un diluant.

Les composés nitroso de formules (II) et (IV) peuvent être utilisés soit sous forme de leurs sels, par exemple chlorure, sulfate ou chlorozincate, soit sous forme d'amine non salifiée. Dans ce dernier cas, le sel de phénoxazinium obtenu après condensation-cyclisation contient l'anion correspondant à l'anhydride carboxylique de formule (VI) utilisé et qui s'est transformé en acide pendant la réaction de formation du colorant; ainsi, un autre avantage du procédé selon l'invention est de pouvoir fournir directement les sels d'acide carboxylique des colorants oxaziniques basiques, sels qui sont très

recherchés pour leur emploi en teinture en raison de leur très grande solubilité dans l'eau.

Les composés nitroso de formule (II) et (IV) peuvent également être préparés dans le milieu même de condensations-cyclisation, c'est-à-dire sans qu'il soit nécessaire de les isoler de leur milieu de formation avant leur réaction avec l'un quelconque des composés (III) ou (V). Ainsi, selon un mode opératoire conforme à l'invention, ou peut traiter de façon connue, à une température comprise entre 0 et 20°C, un composé de formule:

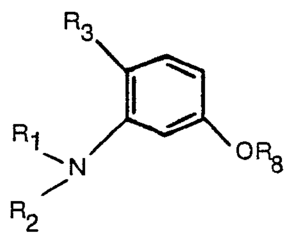

(VII)

ou

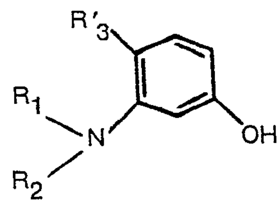

(VIII)

sous forme dissoute ou dispersée dans un diluant, par un nitrite alcalin en présence d'un acide minérale ou organique, puis, lorsque la formation du composé nitroso est terminée, on soumet directement ce composé à la réaction de condensation-cyclisation décrite précédemment. Ce processus de synthèse constitue souvent un mode opératoire préféré à l'échelle industrielle car il est très simple et évite d'exposer le personnel de fabrication à la toxicité de certains composés nitroso. Lors de la mise en oeuvre de ce mode opératoire, il faut veiller, avant d'entreprendre la réaction de condensation-cyclisation, à ajuster si nécessaire le pH du milieu, par exemple dans une zone allant de 1 à 7, et à éliminer un éventuel excès de nitrite. Le réglage du pH peut être effectué à l'aide d'une base minérale ou organique, par exemple un oxyde, un hydroxyde, un carbonate, un bicarbonate, un acétate, une éthanolamine ou une alkylamine ou encore par addition de substances tampon, par exemple un phosphate. L'élimination d'un éventuel excès de nitrite peut être effectuée par décomposition à l'aide d'urée ou d'acide amidosulfonique ou en rajoutant un peu du composé à nitroser de formule (VII) ou (VIII).

Le procédé selon l'invention peut parfois avantageusement être réalisé en présence d'un sel métallique. En effet, bien que l'utilisation d'un sel métallique, qui est connue en soi pour ce type de condensation, soit totalement insuffisante pour provoquer la formation du colorant à basse température, la demanderesse a constaté de façon inattendue que certains métaux renforcent l'action des anhydrides de formule (VI). Cet effet de synergie présente un grand intérêt dans le cas où la réactivité des composés de formule (II) ou (IV) avec les composés de formule (III) ou (V) est faible; il permet ainsi d'augmenter le rendement de préparation de certains colorants oxaziniques difficiles à synthétiser.

Comme sels métalliques utilisables, on peut citer ceux des métaux suivants: magnésium, cobalt, fer, manganèse, aluminium, cuivre, titane et, tout particulièrement, le zinc. Le sel métallique peut être aussi bien un sel inorganique (en particulier un halogénure, un sulfate, un nitrate, un phosphate, un carbonate, un bicarbonate, un chromate, un bichromate, un thiocyanate, un borate, un fluoroborate, un perchlorate) qu'un sel organique quelconque (en particulier un sel d'acide carboxylique aliphatique ou aromatique, par exemple un formiate, un acétate et ses dérivés halogénés, un oxalate, un tartrate, un stéarate, un gluconate, un benzoate, un naphtionate, ou encore un sel d'acide sulfonique comme un benzène-, toluène- ou naphtalène-sulfonate). Le chlorure de zinc est un sel métallique qui est souvent préféré. Selon l'invention, le sel métallique peut éventuellement être formé in situ, par exemple par attaque d'un oxyde ou d'un hydroxyde métallique au moyen de l'acide éventuellement présent dans le milieu de réaction. La quantité de sel métallique à utiliser peut varier dans de larges proportions et dépend de la réactivité des composés à condenser ainsi que des conditions opératoires; la quantité optimale peut être facilement déterminée par des essais préliminaires.

Le sel métallique peut être introduit ou formé dans le milieu réactionnel soit au moment de la formation du composé nitroso si ce dernier n'est pas isolé, soit au moment de la réaction de condensation proprement dite.

Lorsque la condensation des composés de formules (II) et (IV) avec respectivement les composés de formules (III) et (V) est effectuée selon l'invention à température ambiante en présence d'un anhydride, l'utilisation conjointe d'un sel métallique peut conduire intermédiairement aux complexes métalliques dérivés des quinones diimines correspondantes. Il a en effet été constaté que certains de ces complexes sont stables de sorte que la vitesse de la réaction de cyclisation qui doit suivre pour former le cycle oxazinique est éventuellement faible, voire nulle. En outre, et tout particulièrement lorsque l'on utilise un sel de zinc, certains complexes sont peu solubles dans le milieu de condensation de sorte qu'ils peuvent être isolés et même séchés. L'analyse de ces complexes métalliques montre que, suivant les réactifs mis en jeu, ils correspondent probablement aux formules générales suivantes:

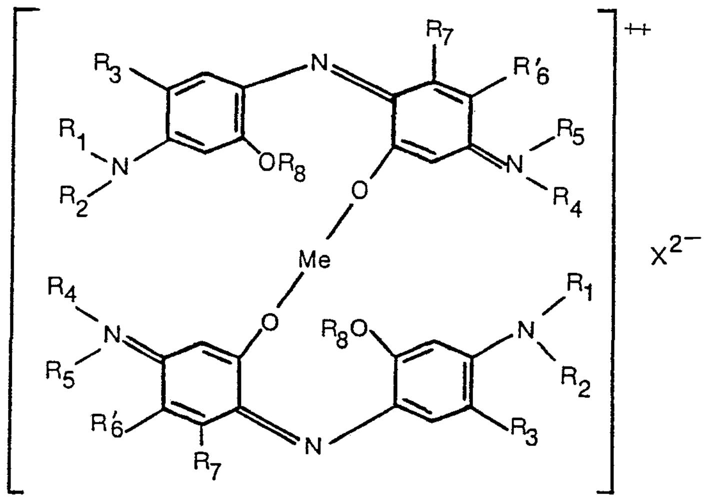

(IX)

ou

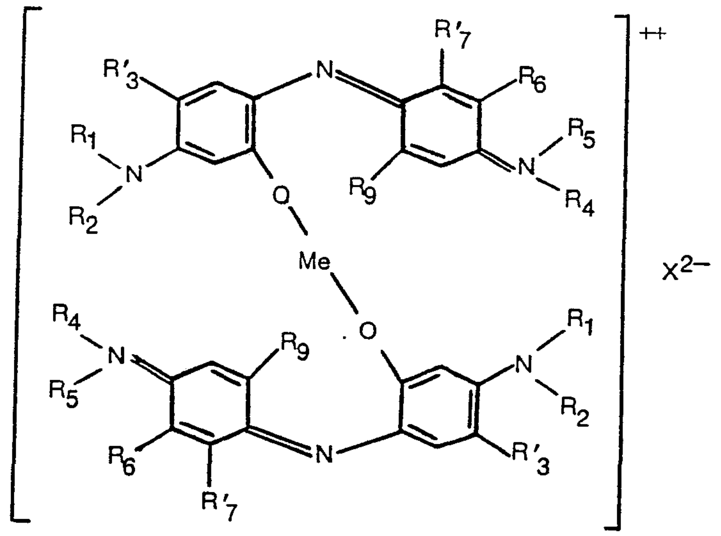

(X)

dans lesquelles les symboles $R_1$ à $R_9$ et X ont les mêmes significations que précédemment et Me représente l'atome de métal introduit.

La formation de ces complexes n'est nullement un inconvénient pour la préparation des colorants oxaziniques basiques conformément au procédé selon l'invention. En effet, ces complexes métalliques stables, qu'ils soient isolés ou non, peuvent de toute façon être aisément transformés en colorants de formule (I); de façon pratique, il suffit de les traiter à température ambiante, en milieu neutre à légèrement alcalin (pH 9), avec un composé capable de précipiter ou de complexer le métal contenu dans le complexe organique pour que la réaction de cyclisation intervienne immédiatement. Le colorant oxazinique basique qui en résulte peut alors être isolé du milieu selon les méthodes connues. Comme composés qui, par réaction d'échange, sont capables d'isoler du milieu sous forme de sel insoluble le métal contenu dans les complexes organo-métalliques intermédiaires, ce qui accélère fortement dans certains cas la cyclisation en colorants oxaziniques, on peut citer principalement des composés minéraux comme les hydroxydes, carbonates, bicarbonates, sulfures, thiocyanates et chromates alcalins. Conviennent aussi des acides sulfoniques, carboxyliques ou des composés hydroxy-aromatiques ainsi que leurs sels. Des composés susceptibles de former avec le métal des complexes très stables, que ceux-ci soient solubles ou insolubles, conviennent également comme, par exemple, le sel de sodium de l'acide éthylènediamine-tétraacétique. Sont à recommander tout spécialement les phosphates de sodium, de potassium et surtout d'ammonium car ces composés précipitent tous les métaux précédemment cités et parce qu'ils provoquent une réaction de cyclisation généralement très rapide.

Comme milieu liquide (diluant) pour dissoudre ou disperser les réactifs lors de la réalisation du procédé selon l'invention, on peut utiliser plus particulièrement l'eau, un alcool aliphatique (de préférence un alcool de bas poids moléculaire comme le méthanol, l'éthanol, le propanol, l'isopropanol, le butanol), aromatique (par exemple l'alcool benzylique) ou cycloaliphatique (par exemple le cyclohexanol), un glycol (par exemple l'éthylèneglycol et le diéthylèneglycol), un éther de glycol (par

exemple l'éther monométhylique, monoéthylique ou monobutylique de l'éthylèneglycol), un acide carboxylique aliphatique (de préférence un acide de bas poids moléculaire comme les acides formique, acétique, propionique et lactique), un éther cyclique (par exemple le dioxane et le tétrahydrofuranne), le formamide ou un N-alkyl-amide (par exemple le diméthylformamide, le diméthylacétamide, la N-méthylpyrrolidone ou le triamide d'acide hexaméthylphosphorique), un sulfoxyde (par exemple le diméthylsulfoxyde), une sulfone (par exemple la tétraméthylène sulfone), un nitrile (par exemple l'acétonitrile), une cétone (par exemple l'acétone, la méthyléthylcétone, la méthylisobutylcétone), la pyridine, ou un mélange de l'un quelconque de ces solvants, en particulier un mélange hydro-organique, que ces solvants soient miscibles ou non-miscibles entre eux.

En raison de leur importance industrielle, on utilise de préférence:

— comme composés de formule (II), ceux dans lesquels $R_1$ et $R_2$ sont des radicaux méthyle, éthyle, $\beta$-cyanéthyle, $\beta$-hydroxyéthyle, $\beta$-hydroxypropyle, $\beta$-chloréthyle ou $\beta$-alcoxyéthyle, $R_3$ est un atome d'hydrogène ou un radical méthyle ou éthyle et $R_8$ est un radical méthyle, éthyle, hydroxyméthyle, $\beta$-hydroxyéthyle ou $\beta$-hydroxypropyle;

— comme composés de formule (III), ceux dans lesquels $R'_6$ et $R_7$ sont des atomes d'hydrogène, $R_4$ est un atome d'hydrogène ou un radical méthyle ou éthyle et $R_5$ est un radical méthyle, éthyle, phényle, tolyle, hydroxyphényle ou méthoxyphényle;

— comme composés de formule (IV), ceux dans lesquels $R_1$ et $R_2$ sont des radicaux méthyle, éthyle ou phényle éventuellement substitué;

— comme composés de formule (V), ceux dans lesquels $R_4$ et $R_5$ sont des atomes d'hydrogène, $R_6$ est un radical méthyle, méthoxy ou éthoxy, $R'_7$ est un atome d'hydrogène et $R_9$ est un groupe $NH_2$ ou un radical méthoxy ou éthoxy.

Les exemples suivants dans lesquels les parties et les pourcentages indiqués sont en poids, sauf mention contraire, illustrent l'invention.

Exemple 1

Dans un récipient ouvert muni d'un agitateur et d'un thermomètre, on introduit successivement 27 parties d'acide acétique, 27 parties de méthoxy-3 diéthylaniline, 30 parties de glace fragmentée et 21,6 parties de chlorure de zinc. Sous agitation et en l'espace d'environ 30 minutes, on coule 20,8 parties en volume d'une solution aqueuse de nitrite de sodium titrant 50% en maintenant la température entre 15 et 18°C par addition de glace. Après avoir agité pendant 30 minutes, on ajoute à la solution du composé nitroso ainsi obtenu 25,4 parties de diéthylamino-3 phénol, puis coule en une heure 15,5 parties d'anhydride acétique en maintenant constamment la température à 25°C par addition de glace. La réaction de condensation est pratiquement instantanée et se fait donc au fur et à mesure que l'anhydride est introduit. On agite encore pendant 15 à 30 minutes, puis on filtre le complexe métallique intermédiaire qui, peu soluble dans l'eau, a cristallisé pendant l'addition de l'anhydride et le lave avec 350 parties d'eau contenant 7 parties de chlorure de sodium. Ce complexe métallique pèse 100 parties sous sa forme humide et a probablement la structure suivante:

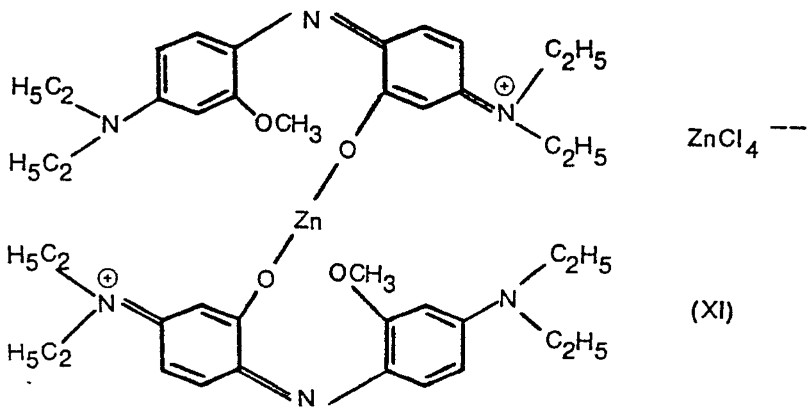

(XI)

*Analyse élémentaire du produit sec:*

| | C% | H% | Zn% | Cl% | N% |
|---|---|---|---|---|---|
| Calculé | 51,28 | 5,90 | 13,3 | 14,44 | 8,54 |
| Trouvé | 51,76 | 5,70 | 14,56 | 14,55 | 8,16 |

La cyclisation de ce complexe métallique est effectuée dans un récipient ouvert contenant 45 parties d'eau et 20,8 parties de phosphate diammonique. On introduit en une heure, sous agitation et

sans chauffer, c'est-à-dire à 20—25°C environ, les 100 parties humides du complexe métallique précédemment isolé, puis on agite encore pendant une heure en vérifiant par chromatographie en couche mince la diminution puis l'absence du complexe métallique (XI) et la formation du colorant oxazinique correspondant.

Pour isoler le colorant sous forme d'un produit sec, on ajoute au mélange issu de l'étape de cyclisation précédente 90 parties d'eau, puis acidifie jusqu'à pH 1,5—2 avec 38 parties en volume d'acide chlorhydrique 10N. On filtre le sel de colorant insoluble et le lave avec 250 parties d'eau contenant 40 parties de chlorure de sodium. Après séchage en étuve à 60°C sous vide, on obtient 66,5 parties d'un colorant de grande pureté répondant à la formule:

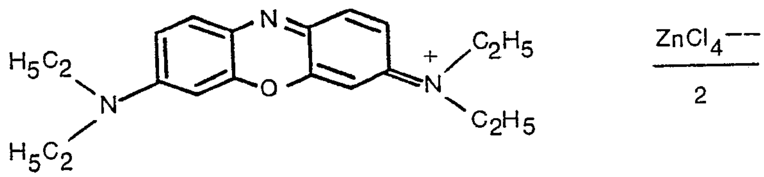

(XII)

Le rendement chimique de la synthèse, déterminé par dosage en spectrophotométrie dans le visible contre le colorant de référence, recristallisé et pur (nitrate), possédant les caractéristiques suivantes: log $\varepsilon = 4{,}9532$ à 655 nm dans $CH_3COOH$ 30%, s'élève à 86%. Le colorant obtenu teint les fibres de polyacrylonitrile en nuance bleu verdâtre d'une grande vivacité.

Si, au lieu d'isoler le colorant sous forme sèche, on désire l'obtenir sous forme d'une solution stable et directement utilisable en teinture, il suffit, lorsque la formation du colorant est achevée, de filtrer le phosphate ammoniacozincique qui s'est formé pendant la réaction de cyclisation et qui est très insoluble dans l'eau. Après un lavage à l'eau de ce dernier et mélange des filtrats, on obtient 185 parties d'une solution du colorant de formule:

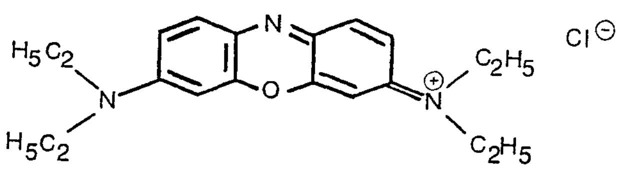

(XIII)

(même rendement que ci-dessus).

Lorsqu'on opère dans les mêmes conditions, mais sans ajouter d'anhydride acétique, on constate qu'il n'y a aucune formation de colorant, même après un temps de contact très prolongé.

Exemple 2

Dans un récipient ouvert on mélange 300 parties en volume de méthyl isobutyl cétone, 16,5 parties de diéthylamino-3 phénol et 30 parties en volume d'anhydride acétique. On introduit ensuite en 3 heures, sous agitation et à la température de 24 à 27°C, 20,8 parties de nitroso-4 méthoxy-3 N,N-diéthylaniline, qui est de préférence utilisée sous forme d'une pâte aqueuse à 45/55% d'extrait sec. On agite encore pendant une heure pour achever la formation du colorant oxazinique basique. On introduit alors 35 parties d'eau à 25°C, laisse en décantation pendant environ 60 minutes et soutire ensuite la phase aqueuse inférieure contenant le colorant. On effectue une deuxième extraction du colorant dans les mêmes conditions que précédemment.

Le mélange des deux extraits aqueux de colorant fournit 110 parties d'une solution contenant 30,2 parties du colorant de formule:

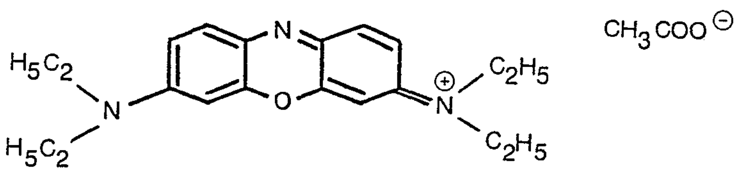

(XIV)

Cette solution, stable au stockage, est directement utilisable pour la teinture des fibres de polyacrylonitrile ou de polyester modifié anioniquement. Le rendement chimique, déterminé comme indiqué à l'exemple 1, est de 79%.

Selon une variante, on peut également obtenir le colorant de formule (XIV) sous forme de poudre

par séchage direct du mélange des deux extraits aqueux par le procédé, connu en soi, d'atomisation.

On peut encore isoler le colorant sous forme de poudre en le précipitant à partir du mélange des deux extraits aqueux à l'aide de 11 parties de nitrate de sodium On agite pendant 30 minutes à 18—22°C, puis filtre le sel de colorant et le sèche à 60°C sous vide. On obtient ainsi sous une forme très pure le colorant de formule:

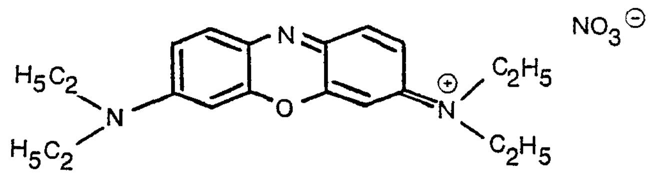

(XV)

La méthyl isobutyl cétone, qui a servi de diluant pour la réaction de condensation-cyclisation et qui n'est pas miscible à l'eau, peut être très facilement récupérée en la soumettant à deux lavages successifs, suivis de décantation, avec d'abord 100 parties d'eau contenant 10 parties en volume d'acide chlorhydrique 10N puis, la seconde fois, avec 50 parties d'eau. Le solvant ainsi traité est directement utilisable pour une nouvelle opération. Il est donc inutile d'effectuer une distillation de sorte que toute la préparation est réalisée à basse température, ce qui constitue un avantage important au niveau industriel.

Exemple 3

Lorsqu'on opère comme à l'exemple 2 mais en remplaçant l'anhydride acétique par la même quantité d'anhydride propionique, on obtient une solution du colorant de formule:

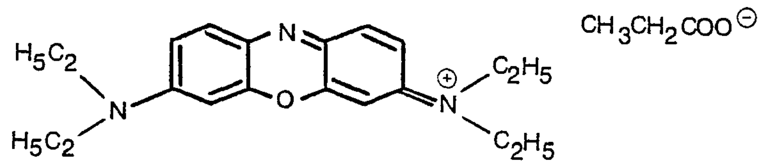

(XVI)

Exemple 4

Dans une solution de 71,6 parties de méthoxy-3 diéthylaniline et 57 parties de chlorure de zinc dans 200 parties en volume d'éthanol à 95% et 80 parties en volume d'acide acétique, on introduit en 20 minutes, à une température comprise entre 5 et 15°C, 55,2 parties en volume d'une solution aqueuse de nitrite de sodium à 50%. On agite encore pendant 2 heures à 15°C pour achever la réaction de nitrosation, puis ajoute une solution de 81 parties d'o-toluidino-3 phénol dans 100 parties en volume d'éthanol. On coule alors en une heure, sans dépasser 25°C, 48 parties en volume d'anhydride acétique, puis isole par filtration le complexe métallique intermédiaire qui, peu soluble dans le milieu, a cristallisé et répond à la formule probable suivante:

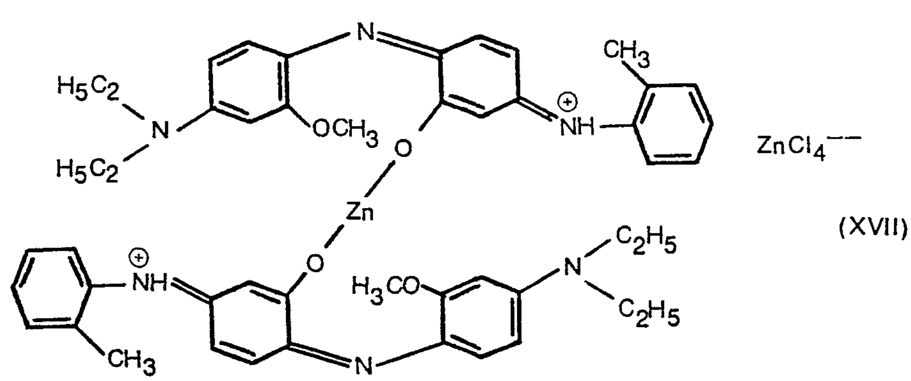

(XVII)

Ce complexe métallique est repris, sous sa forme humide, dans un mélange de 51 parties d'eau, 510 parties d'éthoxy-2 éthanol et 55 parties de phosphate diammonique. On agite pendant 3 heures à 20—22°C, puis ajoute 380 parties d'eau et isole le colorant oxazinique en introduisant 77 parties en volume d'acide chlorhydrique 10N et 260 parties de chlorure de sodium. Après filtration, lavage avec 500 parties d'eau saturée en chlorure de sodium et séchage à 60°C sous vide, on obtient sous une forme très pure 103 parties du colorant oxazinique de formule:

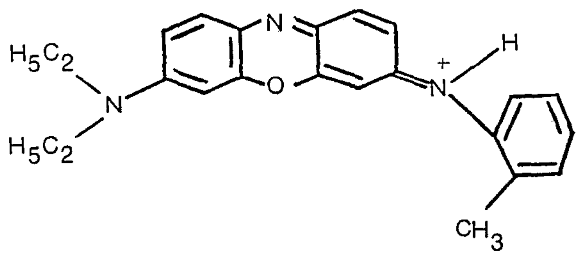

$\frac{ZnCl_4^{--}}{2}$

(XVIII)

qui teint les fibres de polyacrylonitrile en tons bleus neutres très brillants.

### Exemple 5

On dissout 8,25 parties de diéthylamino-3 phénol et 8,6 parties de chlorure de zinc dans 60 parties en volume d'éthanol et 14,5 parties en volume d'acide chlorhydrique 10N. On refroidit à 5°C, puis introduit en 15 minutes 6,9 parties en volume d'une solution aqueuse de nitrite de sodium titrant 50% et agite encore pendant 30 minutes pour achever la réaction de nitrosation. On ajoute alors 6,9 parties de diamino-2,4 anisole dans 10 parties d'éthanol, puis coule en une heure, sans dépasser 25°C, 10 parties en volume d'anhydride acétique. Le colorant oxazinique se forme très rapidement; on le précipite par addition de 200 parties d'eau saturée en chlorure de sodium, le filtre et le sèche à 60°C sous vide. On obtient ainsi 14,5 parties du colorant de formule suivante:

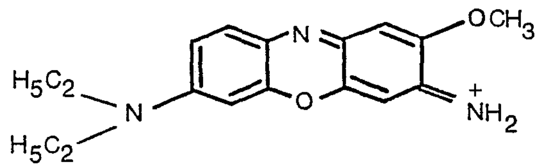

$\frac{ZnCl_4^{--}}{2}$ (XIX)

### Exemple 6

Dans un mélange contenant 62,6 parties d'éther β-hydroxyéthylique de diéthylamino-3 phénol, 43,2 parties de chlorure de zinc, 54 parties d'acide acétique et 60 parties de glace, on coule en 30 minutes, en maintenant la température entre 15 et 18°C par addition de glace, 41,6 parties en volume d'une solution aqueuse de nitrite de sodium à 50%. Après avoir agité pendant une heure, on ajoute 50,8 parties de diéthylamino-3 phénol puis coule en une heure, en maintenant la température à 25°C par addition de glace, 30,6 parties d'anhydride acétique. Après avoir ajouté 50 parties de chlorure de sodium et agité pendant 30 minutes, on filtre, lave et sèche le complexe métallique qui s'est formé (poids: 130 parties).

Pour transformer ce complexe en colorant oxazinique, on l'agite pendant deux heures à 25—28°C dans une solution de 65 parties de phosphate diammonique dans 350 parties d'eau. On sépare par filtration le phosphate ammoniacozincique qui s'est formé et le lave à l'eau pour obtenir 1 500 parties d'une solution de colorant. On isole ce dernier en ajoutant à la solution 154 parties de nitrate de sodium. Après filtration et séchage, on obtient 85 parties du colorant de formule (XV).

### Exemples 7 à 43

Le tableau suivant rassemble d'autres exemples de colorants de formule (I) préparés selon le procédé de l'invention.

| Ex | $R_1$ | $R_2$ | $R_3$ | $R_4$ | $R_5$ | $R_6$ | $R_7$ |
|---|---|---|---|---|---|---|---|
| 7 | méthyl | méthyl | méthyl | $—CH_2CH_2Cl$ | butyl | H | H |
| 8 | " | " | " | $—CH_2CH_2CN$ | éthyl | " | " |
| 9 | " | " | H | H | H | éthoxy | " |
| 10 | " | " | méthyl | " | " | méthoxy | " |
| 11 | " | " | méthoxy | " | " | " | " |
| 12 | " | " | H | " | " | méthyl | " |
| 13 | " | " | " | $—CH_2CH_2CN$ | " | éthoxy | " |
| 14 | éthyl | éthyl | " | H | " | " | " |
| 15 | " | " | " | $—CH_2CH_2OH$ | " | " | " |
| 16 | méthyl | méthyl | " | méthyl | méthyl | H | " |
| 17 | éthyl | éthyl | " | $—CH_2CH_2CN$ | H | méthyl | " |
| 18 | " | " | " | " | " | méthoxy | " |
| 19 | " | " | " | " | méthyl | H | " |
| 20 | H | o-tolyl | " | éthyl | H | méthyl | " |
| 21 | " | " | " | phényl | " | H | " |
| 22 | " | " | " | H | " | méthyl | " |
| 23 | " | " | " | $—CH_2CH_2CN$ | $—CH_2CH_2CN$ | " | " |
| 24 | éthyl | éthyl | " | méthyl | méthyl | " | " |
| 25 | H | " | méthyl | " | " | " | " |
| 26 | " | " | " | H | H | méthoxy | " |
| 27 | " | phényl | " | éthyl | " | méthyl | " |
| 28 | méthyl | méthyl | H | $—CH_2CH_2CN$ | " | méthoxy | " |
| 29 | H | phényl | " | " | " | " | " |
| 30 | $—CH_2CH_2CN$ | $—CH_2CH_2CN$ | " | éthyl | éthyl | H | " |
| 31 | éthyl | éthyl | " | " | $—CH_2CH_2CN$ | " | " |
| 32 | H | méthyl | méthyl | $—CH_2CH_2CN$ | " | " | " |
| 33 | éthyl | éthyl | H | méthyl | $C_2H_4CONH_2$ | " | " |
| 34 | " | " | " | $—CH_2CH_2CN$ | $—CH_2CH_2CN$ | " | $CH_3$ |
| 35 | " | " | " | éthyl | $—C_2H_4CO_2—C_2H_5$ | H | H |

| Ex. | $R_1$ | $R_2$ | $R_3$ | $R_4$ | $R_5$ | $R_6$ | $R_7$ |
|---|---|---|---|---|---|---|---|
| 36 | éthyl | éthyl | H | éthyl | H | méthyl | H |
| 37 | " | " | " | H | " | " | " |
| 38 | méthyl | méthyl | " | éthyl | $—CH_2CH_2OH$ | H | " |
| 39 | H | o-tolyl | " | " | éthyl | " | " |
| 40 | éthyl | éthyl | " | phényl | H | " | " |
| 41 | méthyl | méthyl | méthyl | " | " | " | " |
| 42 | " | " | H | H | " | méthoxy | " |
| 43 | " | " | " | " | " | méthyl | " |

Exemple 44

Dans un mélange agité de 40 parties en volume de méthanol, 1,65 parties de diéthylamino-3 phénol, 2,08 parties de nitroso-4 méthoxy-3 N,N-diéthylaniline, 1,4 parties de chlorure de zinc et 4,5 parties d'acétate de sodium, on introduit en une heure à température ambiante 0,8 partie de chlorure d'acétyle.

Le complexe métallique de formule (XI) qui s'est formé et qui a précipité du milieu au fur et à mesure de l'addition du chlorure d'acétyle, n'est pas isolé mais est aussi-tôt cyclisé. Pour cela, on ajoute au milieu 60 parties d'eau, ajuste le pH à 7,0 avec un peu de soude 10N, introduit 2 parties de phosphate diammonique et agit pendant 2 heures à température ambiante. On sépare alors par filtration le phosphate ammoniacozincique qui s'est formé, puis précipite le colorant oxazinique du filtrat à l'aide de 1,3 parties de nitrate de sodium.

Après filtration et séchage, on obtient 3,07 parties du colorant de formule (XV). Le dosage en spectrophotométrie selon la méthode décrite à l'exemple 1 permet de déterminer le rendement de cette synthèse qui s'élève à 75,6%.

**Revendications**

1. Procédé de préparation de colorants oxaziniques basiques de formule générale:

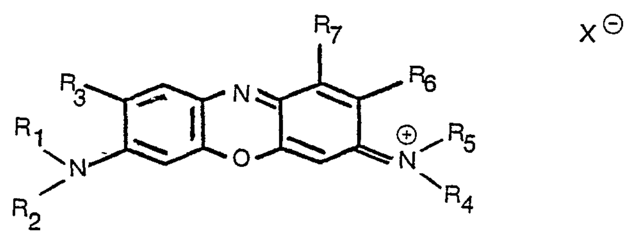

(I)

dans laquelle $R_1$ représente un atome d'hydrogène ou un radical alkyle, alcényle ou aralkyle éventuellement substitué, $R_2$ représente un radical alkyle, alcényle, cycloalkyle, aryle ou aralkyle éventuellement substitué, $R_3$ représente un atome d'hydrogène ou un radical alkyle ou alcoxy, $R_4$ représente un atome d'hydrogène ou un radical alkyle, aryle ou aralkyle éventuellement substitué, $R_5$ représente un atome d'hydrogène ou un radical alkyle, aryle ou aralkyle éventuellement substitué, $R_5$ représente un atome d'hydrogène ou un radical alkyle éventuellement substitué, $R_6$ représente un atome d'hydrogène ou un radical alkyle ou alcoxy, $R_7$ représente un atome d'hydrogène ou un radical alkyle ou forme avec $R_6$ un noyau benzénique condensé et $X^{\ominus}$ représente un anion, qui consiste à faire réagir en milieu aqueux et/ou organique:

a) un composé nitroso de formule (II) avec un aminophénol de formule (III):

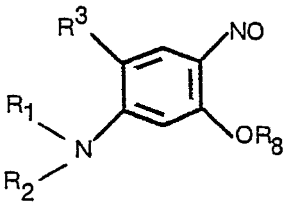

(II)

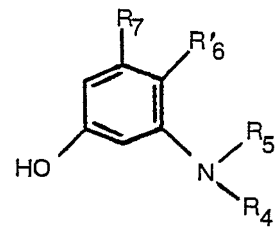

(III)

dans lesquelles les symboles $R_1$ à $R_5$ et $R_7$ ont les mêmes significations que ci-dessus, $R'_6$ représente un atome d'hydrogène ou un radical alkyle et $R_8$ représente un radical alkyle éventuellement substitué, ou

b) un composé nitroso de formule (IV) avec un composé de formule (V):

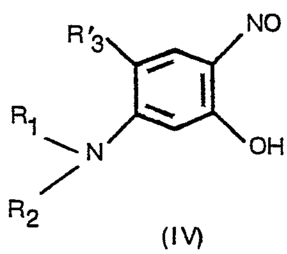

(IV)

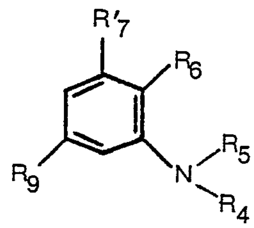

(V)

dans lesquelles les symboles $R_1$, $R_2$, $R_4$, $R_5$ et $R_6$ ont les mêmes significations que ci-dessus, $R'_3$ et $R'_7$ représentent chacun un atome d'hydrogène ou un radical alkyle, et $R_9$ représente un radical alcoxy ou un groupe amino éventuellement substitué par un ou deux radicaux alkyle, ce procédé étant caractérisé en ce que l'on effectue la réaction sans qu'il soit nécessaire de chauffer en présence d'un anhydride d'acide carboxylique de formule:

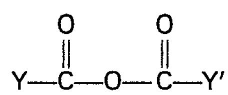

(VI)

dans laquelle les symboles Y et Y' sont identiques ou différents et représentent chacun un radical alkyle linéaire ou ramifié, contenant 1 à 6 atomes de carbone et éventuellement substitué par des atomes d'halogène, ou un radical phényle pouvant porter jusqu'à trois substituants choisis parmi les atomes d'halogène et les groupes nitro, alkyle et alcoxy, l'un des symboles Y et Y' pouvant également représenter un atome d'hydrogène, ledit anhydride étant employé en une quantité au moins égale à la stoechiométrie.

2. Procédé selon la revendication 1, caractérisé en ce que l'on opère sans chauffage.

3. Procédé selon la revendication 1 ou 2 dans lequel l'anhydride de formule (VI) est l'anhydride acétique.

4. Procédé selon l'une des revendications 1 à 3, caractérisé en ce que l'anhydride de formule (VI) est formé in situ.

5. Procédé selon l'une des revendications 1 à 4, caractérisé en ce que l'on ajoute l'anhydride de formule (VI) à un mélange d'un composé nitroso de formule (II) ou (IV) et d'un composé de formule (III) ou (V) respectivement, dans un diluant.

6. Procédé selon l'une des revendications 1 à 4, caractérisé en ce que l'on introduit le composé nitroso de formule (II) ou (IV) dans un mélange du composé de formule (III) ou (V) respectivement et de l'anhydride de formule (VI) dans un diluant.

7. Procédé selon l'une des revendications 1 à 6 pour la préparation des colorants de formule (I) dans lesquels $X^{\ominus}$ est l'anion $YCOO^{\ominus}$ et/ou $Y'COO^{\ominus}$, caractérisé en ce que l'on utilise le composé nitroso (II) ou (IV) sous forme non salifiée.

8. Procédé selon l'une des revendications 1 à 6, caractérisé en ce que le composé nitroso (II) ou (IV) est préparé dans le milieu même de condensation-cyclisation.

9. Procédé selon l'une des revendications 1 à 6 et 8, caractérisé en ce que l'on opère en présence d'un sel métallique.

10. Procédé selon la revendication 9 dans lequel le sel métallique est le chlorure de zinc.

11. Procédé selon la revendication 9 ou 10, caractérisé en ce que le complexe métallique intermédiaire éventuellement formé est traité en milieu neutre à légèrement alcalin par un composé capable de précipiter ou de complexer le métal.

12. Procédé selon la revendication 11, caractérisé en ce qu'on utilise un phosphate de sodium, de potassium ou d'ammonium.

13. Procédé selon l'une des revendications 1 à 12, caractérisé en ce que l'on prépare un colorant de formule (I) dans laquelle $R_1$, $R_2$, $R_4$ et $R_5$ représentent chacun un radical éthyle et $R_3$, $R_6$ et $R_7$ représentent chacun un atome d'hydrogène.

**Patentansprüche**

1. Verfahren zur Herstellung von basischen Oxazin-Farbstoffen der allgemeinen Formel I

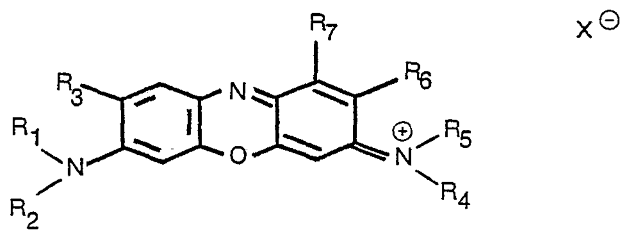

(I)

worin $R_1$ ein Wasserstoffatom oder einen gegebenenfalls substituierten Alkyl-, Alkenyl- oder Aralkylrest bedeutet, $R_2$ einen gegebenenfalls substituierten Alkyl-, Alkenyl-, Cycloalkyl-, Aryl- oder Aralkylrest darstellt, $R_3$ ein Wasserstoffatom oder einen Alkyl- oder Alkoxyrest bedeutet, $R_4$ ein Wasserstoffatom oder einen gegebenenfalls substituierten Alkyl-, Aryl- oder Aralkylrest darstellt, $R_5$ ein Wasserstoffatom oder einen gegebenenfalls substituierten Alkylrest bedeutet, $R_6$ ein Wasserstoffatom oder einen Alkyl- oder Alkoxyrest darstellt, $R_7$ ein Wasserstoffatom oder einen Alkylrest bedeutet oder mit $R_6$ einen kondensierten Benzolkern bildet und $X^{\ominus}$ ein Anion darstellt, wobei in einem wässrigen und/oder organischen Milieu

a) eine Nitrosoverbindung der Formel II mit einem Aminophenol der Formel III

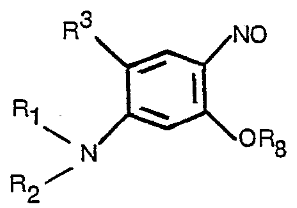

(II)

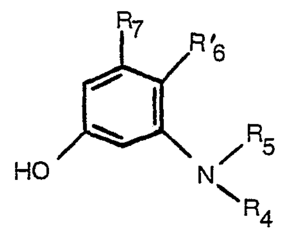

(III)

in denen die Symbole $R_1$ bis $R_5$ und $R_7$ die zuvor angegebene Bedeutung haben, $R'_6$ ein Wasserstoffatom oder einen Alkylrest darstellt und $R_8$ einen gegebenenfalls substituierten Alkylrest bedeutet, oder

b) eine Nitrosoverbindung der Formel IV mit einer Verbindung der Formel V

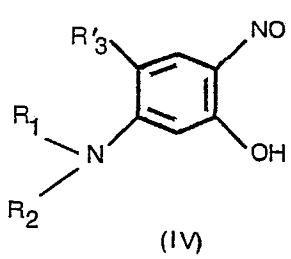

(IV)

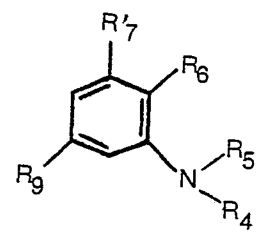

(V)

worin die Symbole $R_1$, $R_2$, $R_4$, $R_5$ und $R_6$ die zuvor angegebene Bedeutung haben, $R'_3$ und $R'_7$ jeweils ein Wasserstoffatom oder einen Alkylrest darstellen, und $R_9$ einen Alkoxyrest oder einen gegebenenfalls mit einem oder zwei Alkylresten substituierten Aminorest bedeutet, umgesetzt wird, dadurch gekennzeichnet, daß die Reaktion ohne Erhitzung in Gegenwart eines Carbonsäureanhydrids der Formel

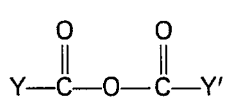

(VI)

worin die Symbole Y und Y' identische oder unterschiedliche Bedeutung haben und jeweils einen linearen oder verzweigten Alkylrest mit 1 bis 6 Kohlenstoffatomen, der gegebenenfalls mit Halogenatomen substituiert ist, oder einen Phenylrest, der bis zu drei Substituenten ausgewählt unter Halogenatomen und Nitro-, Alkyl- und Alkoxyresten, tragen kann, wobei eines der Symbole Y und Y' auch ein Wasserstoffatom darstellen kann, bedeuten und das genannte Anhydrid in einer Menge eingesetzt wird, die mindestens der stöchiometrischen Menge entspricht, durchgeführt wird.

2. Verfahren nach Anspruch 1, dadurch gekennzeichnet, daß es ohne Erhitzen durchgeführt wird.

3. Verfahren nach Anspruch 1 oder 2, dadurch gekennzeichnet, daß das Anhydrid der Formel VI Essigsäureanhydrid ist.

4. Verfahren nach einem der Ansprüche 1 bis 3, dadurch gekennzeichnet, daß das Anhydrid der Formel VI in situ gebildet wird.

5. Verfahren nach einem der Ansprüche 1 bis 4, dadurch gekennzeichnet, daß ein Anhydrid der Formel VI einem Gemisch einer Nitrosoverbindung der Formel II oder IV und einer Verbindung der Formel III oder V in einem Verdünnungsmittel zugesetzt wird.

6. Verfahren nach einem der Ansprüche 1 bis 4, dadurch gekennzeichnet, daß die Nitrosoverbindung der Formel II oder IV in ein Gemisch einer Verbindung der Formel III oder V und des Anhydrids der Formel VI in einem Verdünnungsmittel eingegeben wird.

7. Verfahren nach einem der Ansprüche 1 bis 6 zur Herstellung von Farbstoffen der Formel I, worin $X^{\ominus}$ das Anion $YCOO^{\ominus}$ und/oder $Y'COO^{\ominus}$ bedeutet, dadurch gekennzeichnet, daß die Nitrosoverbindung II oder IV in nicht salzartiger Form verwendet wird.

8. Verfahren nach einem der Ansprüche 1 bis 6, dadurch gekennzeichnet, daß die Nitrosoverbindung II oder IV in demselben Milieu wie demjenigen der Kondensation-Cyclisierung hergestellt wird.

9. Verfahren nach einem der Ansprüche 1 bis 6 und 8, dadurch gekennzeichnet, daß es in Anwesenheit eines Metallsalzes durchgeführt wird.

10. Verfahren nach Anspruch 9, dadurch gekennzeichnet, daß das Metallsalz Zinkchlorid ist.

11. Verfahren nach Anspruch 9 oder 10, dadurch gekennzeichnet, daß der sich gegebenenfalls bildende intermediäre Metallkomplex in neutralem bis leicht alkalischem Milieu mit einer Verbindung behandelt wird, die in der Lage ist, das Metall auszufällen oder zu komplexieren.

12. Verfahren nach Anspruch 11, dadurch gekennzeichnet, daß ein Natriumphosphat, Kaliumphosphat oder Ammoniumphosphat verwendet wird.

13. Verfahren nach einem der Ansprüche 1 bis 12, dadurch gekennzeichnet, daß ein Farbstoff der Formel I gebildet wird, worin $R_1$, $R_2$, $R_4$ und $R_5$ jeweils einen Ethylrest darstellen und $R_3$, $R_6$ und $R_7$ jeweils ein Wasserstoffatom bedeuten.

## Claims

1. Process for the preparation of basic oxazine dyestuffs of the general formula:

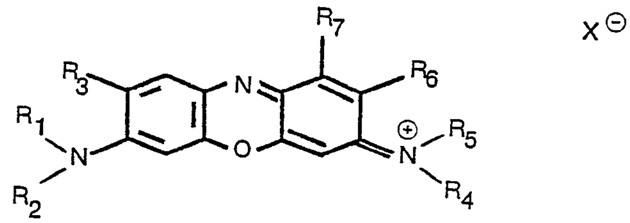

(I)

where $R_1$ represents a hydrogen atom or an optionally substituted alkyl, alkenyl or aralkyl radical; $R_2$ represents an optionally substituted alkyl, alkenyl, cycloalkyl, aryl or aralkyl radical; $R_3$ represents a hydrogen atom or an alkyl or alkoxy radical; $R_4$ represents a hydrogen atom or an optionally substituted alkyl, aryl or aralkyl radical; $R_5$ represents a hvdrogen atom or an optionally substituted alkyl radical; $R_6$ represents a hydrogen atom or an alkyl or alkoxy radical; $R_7$ represents a hydrogen atom or an alkyl radical or forms, with $R_6$, a condensed benzene nucleus and $X^{\ominus}$ represents an anion, which consists in reacting in an aqueous and/or organic medium:

(a) a nitroso compound of formula (II) with an aminophenol of formula (III):

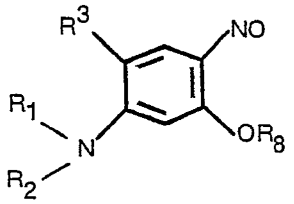

(II)

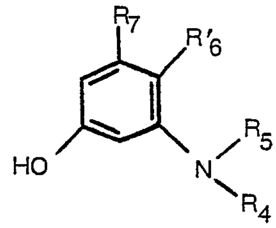

(III)

where the symbols $R_1$ to $R_5$ and $R_7$ have the same significance as above; $R'_6$ represents a hydrogen atom or an alkyl radical and $R_8$ represents an optionally substituted alkyl radical, or

(b) a nitroso compound of formula (IV) with a compound of formula (V):

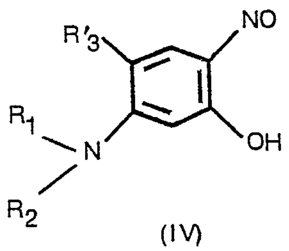

(IV)

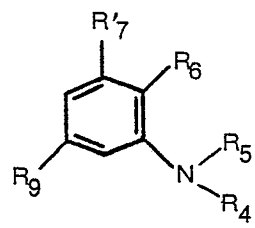

(V)

where the symbols $R_1$, $R_2$, $R_4$, $R_5$ and $R_6$ have the same significances as above; $R'_3$ and $R'_7$ each represent a hydrogen atom or an alkyl radical; and $R_9$ represents an alkoxy radical or an amino group optionally substituted by one or two alkyl radicals, this process being characterised in that the reaction is effected, without its being necessary to provide heat, in the presence of a carboxylic acid anhydride of the formula:

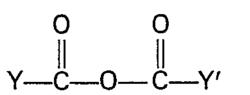

(VI)

where the symbols Y and Y′ are identical or different and each represents a linear or branched alkyl radical, containing 1 to 6 carbon atoms and optionally substituted by halogen atoms, or a phenyl radical able to carry up to three substituents chosen from amongst halogen atoms and nitro, alkyl and alkoxy groups, one of the symbols Y and Y′ also being able to represent a hydrogen atom, said anhydride being used in at least stoichiometric amount.

2. Process according to claim 1, characterised in that the process is performed without any heating.

3. Process according to claim 1 or 2 in which the anhydride of formula (VI) is acetic anhydride.

4. Process according to one of the claims 1 to 3, characterised in that the anhydride of formula (VI) is formed in situ.

5. Process according to one of the claims 1 to 4, characterised in that the anhydride of formula (VI) is added to a mixture of a nitroso compound of formula (II) or (IV) and a compound of formula (III) or (V) respectively, in a diluent.

6. Process according to any one of the claims 1 to 4, characterised in that the nitroso compound of formula (II) or (IV) is introduced into a mixture of the compound of formula (III) or (V) respectively and of the anhydride of formula (VI) in a diluent.

7. Process according to one of the claims 1 to 6 for the preparation of dyestuffs of formula (I) in which $X^{\ominus}$ is the anion $YCOO^{\ominus}$ and/or $Y'COO^{\ominus}$, characterised in that the nitroso compound (II) or (IV) is used in a non-salified form.

8. Process according to one of the claims 1 to 6, characterised in that the nitroso compound (II) or (IV) is prepared in the actual condensation-cyclisation medium.

9. Process according to one of the claims 1 to 6 and 8, characterised in that the process is effected in the presence of a metal salt.

10. Process according to claim 9 in which the metal salt is zinc chloride.

11. Process according to claim 9 or 10, characterised in that the intermediate metallic complex which is likely to form is treated in a neutral to slightly alkaline medium with a compound capable of precipitating the metal or forming a complex of it.

12. Process according to claim 11, characterised in that a phosphate of sodium, potassium or ammonium is used.

13. Process according to one of the claims 1 to 12, characterised in that a dyestuff of formula (I) where $R_1$, $R_2$, $R_4$ and $R_5$ each represent an ethyl radical and $R_3$, $R_6$ and $R_7$ each represent a hydrogen atom is prepared.